Europäisches Patentamt

**European Patent Office**

**Office européen des brevets**

(19)

(11) Publication number: **0 117 235**

**B1**

(12) ◂ # EUROPEAN PATENT SPECIFICATION

(45) Date of publication of patent specification: **08.06.88**

(51) Int. Cl.⁴: **G 05 B 19/10,** G 05 B 19/42

(21) Application number: **84830027.3**

(22) Date of filing: **08.02.84**

(54) **Electronic sequencer programmed and programmable by the user directly from the control panel of the associated operating equipment.**

(30) Priority: **22.02.83 IT 334483**

(43) Date of publication of application:
**29.08.84 Bulletin 84/35**

(45) Publication of the grant of the patent:
**08.06.88 Bulletin 88/23**

(84) Designated Contracting States:
**DE FR GB**

(56) References cited:
**DE-A-2 624 733**
**GB-A-2 052 800**
**GB-A-2 086 612**
**GB-A-2 118 739**
**US-A-3 920 972**

(73) Proprietor: **Marani, Gianni**
**Via Gramsci, 68**
**Funo di Argelato (Bologna) (IT)**
(73) Proprietor: **Ansaloni, Emo**
**Via Ruffini, 6**
**Bologna (IT)**

(72) Inventor: **Marani, Gianni**
**Via Gramsci, 68**
**Funo di Argelato (Bologna) (IT)**
Inventor: **Ansaloni, Emo**
**Via Ruffini, 6**
**Bologna (IT)**

(74) Representative: **Dall'Olio, Giancarlo**
**c/o INVENTION s.n.c. V.le Broccoli n.2B Fraz.**
**Osteria Grande**
**I-40067 Castel s. Pietro Terme (Bologna) (IT)**

Courier Press, Leamington Spa, England.

## Description

The existence is known, for example, of operating equipment of electromechanical type that comprises a plurality of electrically controlled actuators with which it is possible to achieve a number of working cycles, each of which defined, for example, in phases that are synchronous or displaced one with respect to the other, by several contemporaneous operations whose duration depends on the particular cycle wanted.

In one known solution, the energizing and deenergizing of the electrical circuits of the actuators is realized as a consequence of the actuation or the inactivity of corresponding microswitches tripped by corresponding cams rigidly mounted on a shaft, this system being known as the electromechanical programmer.

The angular velocity of the shaft and/or the profile of each cam determines the duration of the corresponding phase of the cycle.

A pre-established programme (with a corresponding operating cycle) is obtained with an electromechanical programmer and thus for a cycle that differs from the previous one, this obviously makes the substitution of one or more cams, or the complete programmer, compulsory.

Furthermore, known and utilized are punched card programmers in which a motor is provided for moving forward the cards that are provided with a plurality of parallel tracks and in each of which interruptions (variations in gauge between two characteristic values) have been made in advance. The making and breaking of corresponding microswitches occurs as a result of these coming into contact with the thick gauge and the thin gauge sections of the track, respectively.

It should be noted that the said cards (generally made of synthetic resin) are prepared with the use of special equipment, in accordance with a predetermined programme, which normally calls for assistance to be given by a specialist technician with all the additional costs this involves.

Other negative aspects of the solution to which reference has just been made consist in the fact that any error made at the punching time renders the card unusable, that the cards easily deteriorate, and that a dual close error in the gauge of the track is not readily appreciated by the microswitch concerned, this being a source of retard (and therefore a lack of precision) in the two successive phases corresponding to the said double interruption.

In place of the above considered electromechanical and punched card programmers, use is also made of programmed logical sequencers virtually constituted by a microcomputer that operates in accordance with predetermined programmes, a plurality of relays that attend to the function performed by the microswitches mentioned in respect to the preceding solutions.

The negative aspect of the foregoing method, to which stress should be given, is that the programmes defining the operating cycles of the electromechanical apparatus are prepared in advance on special equipment independent of the said sequencer, with all the problems this involves, such as assistance to be given by specialist technicians the waste of time and consequential costs, etc.

In the document US—A—3920972, for example a method and apparatus is disclosed for teaching a cycle of operation to a computer operated robot arm thereby permitting the arm to automatically iterate the cycle of operation.

The apparatus is operable with a robot arm having a geometric configuration defining a generalized coordinate system.

By means of manually operable controls, a controlled element attached to one end of the arm is commanded to move to a number of predetermined points defining a desired path in space.

This command motion is executed relatively to a teaching coordinate system, e.g. a rectangular coordinate system which is noncoincident with the generalized coordinate system of the robot arm.

When the controlled element is positioned at a predetermined point, further manual controls are operable to generate input signals defining a robot arm operation to be executed at said point.

Next, the input signals and the coordinate information defining the predetermined point are transferred to a memory.

After a complete cycle of operation has been transferred to the memory, the robot arm operation may be transferred to an automatic mode which causes the arm to automatically repeat the programmed cycle of operation.

Document GB 2086612, discloses an Industrial robot.

For training the robot, a FOLLOW mode is selected by putting a switch in a first position and a command datum is replaced by a position datum the value of which is periodically entered in a register via a switch which is periodically closed by pulses from a pulse generator.

When the robot is at a position to which it is to be trained, a switch is closed to write the then contents of the register in a memory for subsequent use in the COMMAND mode.

For each degree of freedom of the robot and in the COMMAND mode (switch 32 in a second position) a corresponding movable member is moved by an actuator in accordance with an error signal formed as the difference between a command datum supplied from a register and an actual position datum supplied by a position sensor, the command data required from time to time being provided from a memory via a circuit.

The object of the invention is to make available a sequencer with which the person using the operating equipment to which the said sequencer is connected, is able to create any personalized programme obtainable with the equipment in question by merely adjusting the controls on the control board of the operating equipment, and with which the said programme is subsequently rendered executive therein, completely without any time lost in the preparation of the programme, without any limitation in the type of programme that can be prepared, and without the aid of specialized personnel.

A further object of the invention is to make available a sequencer that can easily and rapidly be linked up to prior installed electromechanical equipment set up for the use of electromechanical equipment set up for the use of electromechanical or punched card programmers.

Finally an object of the invention is to make available a sequencer wherein the user is able to create directly a personal range of programmes and, when deemed opportune, to render the required programme executive.

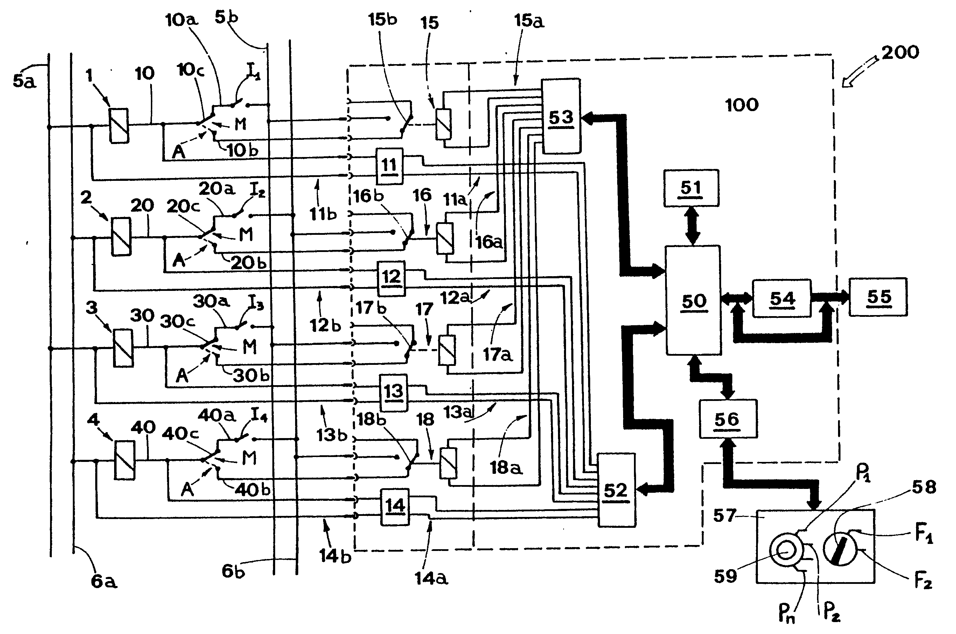

The sequencer in question can easily be designed in such a way to allow it to be utilized in prior installed electromechanical equipment set up for manual and automatic operation. The only thing that has to be done to adapt the said equipment for use with the said sequencer is to connect input lines to actuators, for example in the way illustrated in the accompanying drawing or in accordance with the variants to which prior reference has been made in this description.

The foregoing is extremely advantageous since it makes possible the substitution of the prior mentioned electromechanical and punched card programmers with the sequencer forming the subject of the invention.

The above objects are achieved with the electronic sequencer programmed and programmable by the user directly from the control panel of associated operating equipment of the type that comprises a plurality of actuators set in action by corresponding electrical circuits, each of which being defined by one or the other of two inter commutable branches, namely a first branch and a second branch, the first of which destined to consent, for the manual operation of first control means connected thereto, to the circuit being energized or inactive; the said sequencer comprising, furthermore, a microcomputer linked to the said operating equipment and having, amongst other things, two interfaces, that is to say, an input interface and an output interface, as well as a terminal for the control of the said microcomputer; the said sequencer being characterized by the fact that it comprises: a plurality of devices for repeating the state of the electrical signals, the input of each of the repeaters being connected to the electrical circuit of a corresponding actuator, and the output to the said input interface, the said repeaters being destined to convert the electrical state corresponding to the energizing or the inactivity of the electrical circuits concerned, when these are defined by the said first branches, into corresponding electrical levels of an equivalent number of binary signals; a plurality of second control means, each of which connected to the said output interface and to the second branch of the electrical circuit of a corresponding actuator, the said second control means being destined to cause the electrical circuits concerned to be energized or inactive, when the said circuits are defined by the said second branches, compatibly with the levels of the corresponding binary signals sent thereto through the said output interface; and at least one permanent re-utilizable and programmable memory, connected to the said microcomputer, destined, during an acquisition phase envisaged in the programme of this, rendered executive through a corresponding control instruction forthcoming from the said terminal, to memorize stably the binary signals sent to the said input interface by the said repeaters pertaining to the definition of an operating cycle set manually on the said equipment by means of the said control panel, the said permenant memory being destined, furthermore, in consequence of an execution phase envisaged in the programme of the said microcomputer and rendered executive through a corresponding control instruction forthcoming from the said terminal, to be linked, after the said storage operation, to the said output interface in order to send sequentially to this the binary signals stored therein.

In order to place additional emphasis on the above mentioned characteristics of the sequencer according to the invention, a description will now be given of one embodiment, illustrated purely as an unlimited example on the one accompanying drawing.

With reference to the said drawing, shown at 1, 2, 3, 4, . . ., are a similar number of electrically controlled actuators for operating equipment (for example, of electromechanical type) that is not illustrated since it can be of any kind. The electrical circuit 10, 20, 30, 40, . . ., of the said actuators are defined either by a first branch 10a, 20a, 30a, 40a, . . ., or by a second branch 10b, 20b, 30b, 40b, . . ., respectively, intercommutable through corresponding changeover switches 10c, 20c, 30c, 40c, . . ., operated solely from the control panelin two positions, namely a manual position M and an automatic position A, these positions corresponding to the manual operation and the automatic operation, respectively, of the operating equipment.

It is obvious that the voltages with which the said electrical circuits are supplied depend on the corresponding actuator; by way of an example, the electrical circuits 10 and 30 can be shunted between the conductors 5a and 5b, while the electrical circuits 20 and 40 can be shunted between the conductors 6a and 6b.

Provided in series with the first branches 10a, . . . 40a are the corresponding switches I1, I2, I3 and I4 (first control means), and these are operated, similary to the said changeover switches, from a non-illustrated control panel.

With the said changeover switches in position M, it is quite clear that whether the circuits 10, 20, 30, 40 are energized or inactive depends on the user turning or not turning the said switches: manual operation of the electromechanical equipment.

Shown at 100 on the accompanying drawing is a microcomputer and at 50 and 51, the central processing unit and the memory thereof, respectively, at 52 the input interface, at 53 the output interface, at 54 an auxiliary memory, at 56 a further interface interposed between the central processing unit 50 and a terminal 57 provided for the control of the said microcomputer. Well visible on the terminal are two changeover switches 58 and 59, more about which will be said hereinafter.

Connected to the microcomputer 100 is a permanent programmable and re-utilizable memory (further mention of which will be made below) that fits into and can be taken out a non-illustrated housing provided for this purpose in the support structure of the microcomputer and wired electrically thereto.

The lines 11a, 12a, 13a and 14a coming from the outputs of corresponding signal repeaters 11, 12, 13 and 14 are connected to the input interface 52, while the input lines of the said repeaters are shunted on to the terminals of the actuators 1,2, 3 and 4, respectively.

The function of the said repeaters 11, 12, 13 and 14 is to convert the electrical state corresponding to the energizing or the inactivity of the corresponding circuits 10, 20, 30 and 40, when the changeover switches in respect of these are in the said position M, into corresponding electrical levels of an identical number of binary signals present at the outputs 11a, ... 14a.

It should be emphasized that the electrical state of the said circuits can be ascertained, besides in the way given as an example above, also through inductive or capacitive type couplings, or by making use, in a suitable fashion, of the current circulating in the said circuits, or else with other systems for detecting the electrical state known to experts in the field. To the output interface 53 are connected the lines 15a, 16a, 17a and 18a, the load of which is constituted by the coils of the relays 15, 16, 17 and 18, respectively, (second control means).

The contacts 15b, 16b, 17b and 18b of the said relays are connected to the second branch 10b, 20b, 30b and 40b, of the circuits 10, 20, 30 and 40.

From an examination of the accompanying drawing, it follows that with the said changeover switches in position A, the operation or inactivity of the said circuits is occasioned by the energizing and deenergizing, respectively. of the corresponding relays, these being set in and taken out of action by a corresponding electrical level in the binary signal sent to the coils concerned through the interface 53.

To conclude, the electronic sequencer according to the invention, shown at 200, is constituted by the microcomputer 100 (with the associated permanent memory 55), by the said repeaters and by the said relays. The setting up of a personalized programme takes place in the way described below.

The user has to position, through one single control, the changeover switches 10c, ... 40c in position M, to position the changeover switch 59 in a position P1, P2, ... Pn that defines a predetermined "storage area" for the memory 55, as well as to position the changeover switch 58 in position F1, the last mentioned operation rendering executive the first phase (or data acquisition phase) of the envisaged programme in the microcomputer.

At this juncture, the user then has to get the switches I1, I2, I3 and I4 to make or break in accordance with times dependent on personal considerations resulting from past experience and/or creative ability, in such a way as to define a personalized operating cycle.

Through the said repeaters, the electrical states of the actuators are converted into corresponding binary signals (or data) that are transferred sequentially (in consequence mf the said data acquisition phase) into the permanent memory 55, with a suitable scanning interval in between one signal and another.

Upon completion of the said operating cycle (set manually at the operating equipment by the user) two situations are possible: the first pertains to the case in which the user is not satisfied with the cycle just carried out and thus since the information stored in the memory 55 is not deemed to be of interest, it can subsequently be cancelled in the course of a further data acquisition phase; the second relates to the case in which the above mentioned cycle is considered satisfactory and thus no further operations are needed apart from indicating on the container of the memory 55 the type of cycle recorded and the relevant order number P1, P2, PN, defined by the said changeover switch 59.

As regards the position P1, P2, ... PN of the changeover switch 59, it should be emphasized that these are at least numerically equivalent to the storage capacity of the memory 55, that is to say, to the number of programmes it is possible to store therein, based on the number of sequence steps per programme.

It should also be stressed that with the above procedure, it is possible to set up any type of personalized programme and any number of programmes. Regarding the actual number of programmes, all that has to be done is to replace the memory 55 (once the maximum number of programmes compatible with the capacity thereof have been stored) with a brand new memory 55 or with a used memory 55 to be retulized.

Insofar as the execution of the programmes prepared in the way outlined above is concerned, all that has to be done is to connect the memory 55 containing the required program to the microcomputer 100, position the changeover switch 59 in the Pn position pertinent to the order number of the programme in the said memory 55, and position (using one single control) the changeover switches 58 on F2 (programme execution phase).

The binary signals (data) memorized in the chosen programme stored in the memory 55 are, in this last mentioned phase, sent to the output interface 53 in order to pilot the said relays 15, 16, 17 and 18 so as to obtain automatically from the actuators 1, 2, 3, and 4 a succession of electrical states that define a personal operating cycle (on the operating equipment) identical to that set up previously by the user.

## Claim

Electronic sequencer controlling a plurality of actuators (1, 2, 3, 4) activated by drive circuits (15, 16, 17, 18) controlled by a processor (100) responsive to a program stored in a memory (55), comprising a panel (57) including a first changeover switch (58) for selecting between a data acquisition mode and an execution mode, said data acquisition mode including interrupting the automatic control and initiating a manual control by the first changeover switch, manually controlling the sequence of operation in a manner appropriate for the user, sensing a signal depending on the operative condition of the actuators as controlled by the manual operation, storing said sensed signals in the memory (55), said execution mode comprising automatic control of the sequence using said program stored during the data acquisition mode, characterised by further changeover switches (10c, 20c, 30c, 40c) each branched in series with a respective actuator (1, 2, 3, 4) for switching either to a circuit (10b, 20b, 30c, 40b) controlled by the drive circuit (15, 16, 17, 18) in the automatic mode or to a manual control circuit (10a, 20a, 30a, 40a) including a manual control switch (I1, I2, I3, I4) for manually controlling operation of the respective actuator (1, 2, 3, 4) when the associated further changeover switch (10c, 20c, 30c, 40c) is set to the manual control mode, the sensed signal being the directly measured operative condition fed to sensor means (11, 12, 13, 14) which convert this signal into binary coded signals for the processor (100), said further changeover switches (10c, 20c, 30c, 40c) and manual control switches (I1, I2, I3, I4) being operable from the panel (57).

## Patentanspruch

Elektronische Anlaufsteuerung zur Steuerung einer Mehrzahl von Trieben (1, 2, 3, 4), die durch Treiber (15, 16, 17, 18) aktiviert und durch einen Mikroprozessor (100) gesteuert werden, welcher aufgrund eines in einem Speicher (55) gespeicherten Programms arbeitet, versehen mit einem Bedienfeld (57), wobei dieses Bedienfeld mit einem ersten Umschalter (58) versehen ist, welcher der Auswahl zwischen einer Datenerfassungsphase und einer Ausführungsphase dient, wobei genannte Datenerfassungsphase mit Unterbrechung der automatischen Steuerung und Beginn der manuellen Steuerung über den ersten Umschalter, mit manueller Steuerung der Ablauffolge gemäss Benutzeranforderung, mit Erfassung eines vom Betriebszustand der gesteuerten Triebe abhängigen Signals und anschliessender Speicherung genannter, im Speicher (55) erfassten Signale erfolgt und wobei genannte Ausführungsphase mit automatischer Steuerung der Ablauffolge aufgrund des während der Erfassungsphase gespeicherten Programms erfolgt, dadurch gekennzeichnet, dass weitere Umschalter (10c, 20c, 30c, 40c) vorhanden sind, wobei jeder mit einem entsprechenden Trieb (1, 2, 3, 4) in Reihe geschaltet ist und zur Aktivierung einer durch den Treiber (15, 16, 17, 18) gesteuerten Schaltung (10b, 20b, 30b, 40b) dient, wenn die automatische Betriebsweise aktiviert ist bzw. einer manuell gesteuerten Schaltung (10a, 20a, 30a, 40a), mit der ein manueller Schalter (I1, I2, I3, I4) zur manuellen Steuerung der Vorgänge des entsprechenden Triebes (1, 2, 3, 4) verbunden ist, wenn der damit gekoppelte, weitere Umschalter (10c, 20c, 30c, 40c) auf manuelle Betriebsart geschaltet ist, wobei das erfasste Signal dem direkt gemessenen Betriebszustand entspricht und an Sensoren (11, 12, 13, 14) geliefert wird, welche genanntes Signal mit Hilfe des Mikroprozessors (100) in ein Signal im Binärcode umwandeln, wobei weitere Umschalter (10c, 20c, 30c, 40c) und manuelle Schalter (I1, I2, I3, I4) über die Tafel (57) aktiviert werden.

## Revendication

Séquenceur électronique pour la commande de plusieurs actuateurs (1, 2, 3, 4) activés par l'intermédiaire de circuits pilote (15, 16, 17, 18) commandés par un microprocesseur (100) opérant selon un programme mémorisé dans une mémoire (55), comprenant un panneau (57) associé à un premier commutateur (58) destiné à permettre la sélection entre une phase d'acquisition des données et une phase d'éxécution, avec ladite phase d'acquisition des données s'accomplissant avec l'interruption du contrôle automatique et le démarrage du contrôle manuel au moyen du premier commutateur, avec contrôle manuel de la séquence des opérations conformément aux exigences de l'utilisateur, avec relevé d'un signal qui dépend de l'état opérationnel des actuateurs contrôlés manuellememt puis mémorisation desdits signaux relevés dans la mémoire (55), et avec ladite phase d'exécution s'accomplissant au moyen de la commande automatique de la séquence des opérations conformément au programme mémorisé pendant la phase d'acquisition, étant caractérisé par la présence d'autres commutateurs (10c, 20c, 30c, 40c), chacun dérivé en série avec un actuateur correspondant (1, 2, 3, 4) et ayant le but d'activer un circuit (10b, 20b, 30b, 40b) commandé par le circuit pilote (15, 16, 17, 18) quand la modalité opérationnelle automatique est activée, ou d'activer un circuit à commande manuelle (10a, 20a, 30a, 40a) auquel est relié un interrupteur manuel (I1, I2, I3, I4) pour le contrôle manuel des opérations de l'actuateur correspondant (1, 2, 3, 4), lorsque l'autre commutateur associé (10c, 20c, 30c, 40c) est disposé selon la modalité de commande manuelle, le signal relevé correspondant à l'état opérationnel direçtement mesuré et fourni à des capteurs (11, 12, 13, 14) qu convertissent ledit signal en code binaire grâce au microprocessur (100), avec lesdits autres commutateurs (10c, 20c, 30c, 40c) et interrupteurs manuels (I1, I2, I3, I4) rendus opérationnels à partir du panneau (57).